# EUROPÄISCHE PATENTANMELDUNG

(11) **EP 1 798 461 A2**
(43) Veröffentlichungstag der Anmeldung: **20.06.2007**
(21) Anmeldenummer: 06025645.0
(22) Anmeldetag: 12.12.2006
(51) Int. Cl.: F16L 55/115

(54) **Verschlussdeckel**

(30) Priorität: 14.12.2005 DE 102005059731
(71) Anmelder: GM Global Technology Operations, Inc., Detroit, MI 48265-3000 (US)
(72) Erfinder: Bergbauer, Dietmar, 63179 Obertshausen (DE); Nordmann, Björn, 55270 Zornheim (DE)
(74) Vertreter: Strauss, Peter

(57) **Zusammenfassung**

Die Erfindung betrifft einen Verschlussdeckel für Rohre, umfassend eine im Wesentlichen runde Grundfläche (2), die auf einer Seite einen Ringflansch (3) zum Umfassen einer Rohröffnung hat, und die auf der anderen Seite mindestens zwei senkrecht zur Grundfläche ausgerichtete, auf einer Kreislinie angeordnete Halteelemente (6a, 6b, 6c, 6d) besitzt, mit denen der Verschlussdeckel (1) an einer Rohröffnung befestigbar ist.

## Beschreibung

Die Erfindung betrifft einen Deckel zum Verschließen einer Rohröffnung.

Deckel zum Verschließen der Öffnung eines Behälters, wie beispielsweise eines Rohrs, gibt es in den verschiedensten Ausführungen. So gibt es Verschlussdeckel mit einer runden Grundfläche, die randseitig einen Ringflansch zum Umschließen der kreisförmigen Öffnung haben. Der Verschlussdeckel ist bzgl. seiner Abmessungen an den Behälter angepasst und verschließt die Behälteröffnung im Passsitz.

Eine Aufgabe einer Ausführungsform der Erfindung besteht darin, einen Verschlussdeckel bereitzustellen, mit dem verschiedene Öffnungen verschlossen werden können.

Die Lösung dieser Aufgabe erfolgt mit den Merkmalen der unabhängigen Ansprüche. Vorteilhafte Weiterbildungen werden durch die Merkmale der abhängigen Ansprüche wiedergegeben.

In einer ersten Ausführungsform wird ein Verschlussdeckel für Rohre vorgeschlagen, der eine Grundfläche hat, zum Beispiel eine im Wesentlichen runde Grundfläche, und dessen Grundfläche auf einer Seite einen Ringflansch zum Umfassen einer kreisförmigen Öffnung hat, z. B. diejenige eines Rohres. Weiterhin hat der Verschlussdeckel auf der anderen Seite der Grundfläche mindestens zwei senkrecht zur Grundfläche ausgerichtete Halteelemente, mit denen der Verschlussdeckel im Bereich einer Behälteröffnung bzw. an einer Behälteröffnung befestigbar ist, um diese zu verschließen. Die Halteelemente können länglich ausgebildet sein, z. B. stäbchenförmig oder zylindrisch.

Der Verschlussdeckel kann mit dem Ringflansch eine Rohröffnung umfassen und kann im Passsitz bündig am Rohrende sitzen. Durch die Klemmwirkung wird ein Abfallen des Deckels verhindert. Letzteres wird ggf. mit einer am Ringflansch angebrachten ringförmigen Hinterschneidung unterstützt, die eine endseitige Verdickung des Rohrendes hintergreift.

Die Halteelemente auf der anderen Seite der Grundfläche dienen dazu, eine andere Behälteröffnung zu verschließen, die nicht mit einem Ringflansch umfasst werden kann, oder in die ein Ringflansch nicht einfahren kann. Dies kann der Fall sein, weil die andere Behälteröffnung nicht kreisförmig ist. Dies kann auch sein, weil die Behälteröffnung zwar kreisförmig ist, aber diese über seitlich außen an der Behälteröffnung angeformte Schraubaugen verfügt und deswegen nicht umfasst werden kann.

Eine Ausführungsform des Verschlussdeckels sieht auf einer Kreislinie angeordnete Halteelemente vor. In diesem Fall können Halteelemente gewählt werden, die in auf einer Kreislinie angeordneten Schraubaugen einführbar sind. Dort verklemmen die Halteelemente und sorgen dafür, dass die Grundfläche des Verschlussdeckels bündig an der von den Schraubaugen umgebenen Behälteröffnung, z. B. eine Rohröffnung, anliegt.

In einer Ausgestaltung des Verschlussdeckels besitzt dieser Rastnasen als Halteelemente. Dies setzt voraus, dass das Rohr einen zu hintergreifenden Rohrabschnitt aufweist, um eine Rastverbindung einzugehen.

In einer weiteren Ausgestaltung des Verschlussdeckels werden Halteelemente gewählt, die in eine kreisrunde Öffnung einführbar und dort im Pass- bzw. Klemmsitz positionierbar sind. In diesem Fall kann eine Rohröffnung, die seitlich angeformte Schraubaugen besitzt, verschlossen werden.

In einer Ausführungsform des Verschlussdeckels werden Halteelemente gewählt, deren Projektion auf die Grundfläche eine n-zählige Symmetrie aufweist oder ein Kreis ist. In diesem Fall ist die Klemmkraft im Inneren der kreisrunden Öffnung radial gleichmäßig und wird die Rohröffnung zuverlässig verschlossen.

In einer weiteren Ausführungsform besteht das Halteelement aus zwei sich kreuzenden und senkrecht zueinander stehenden plättchenförmige Stegen.

Eine Ausführungsform des Verschlussdeckels besitzt ferner Halteelemente, die sich zu der der Grundfläche abgewandten Seite hin verjüngen. Hierdurch wird das Einbringen der Halteelemente in eine Öffnung, z. B. ein Bohrloch oder ein Schraubgewinde, vereinfacht und die Klemmwirkung verstärkt.

In einer weiteren Ausgestaltung des Verschlussdeckels bestehen die Halteelemente aus einem elastischen Material, z. B. einem Kunststoff wie PED.

In einer Ausgestaltung des Verschlussdeckels hat diejenige Seite der Grundfläche, die einen Ringflansch besitzt, mindestens einen weiteren Ringflansch. In diesem Fall kann die besagte Verschlussdeckelseite zum Verschließen von Öffnungen mit unterschiedlichen Radien benutzt werden.

Bei einer weiteren Ausführungsform des Verschlussdeckels hat die mit Halteelementen versehene Seite der Grundfläche ebenfalls mindestens einen Ringflansch.

Ferner kann vorgesehen sein, dass die mit einem Ringflansch ausgestattete Seite der Grundfläche ebenfalls mindestens zwei senkrecht zur Grundfläche ausgerichtete Halteelemente besitzt. Die Haltelemente können in allen Fällen von seitlich an die Grundfläche angeformten Laschen abstehen.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigt:
- Fig. 1: eine perspektivische Ansicht einer Ausführungsform des Verschlussdeckels,
- Fig. 2: eine Draufsicht auf die Unterseite des Verschlussdeckels der Figur 1,
- Fig. 3: ausschnittsweise einen Verschlussdeckel in einer Seitenansicht,
- Fig. 4: ausschnittsweise einen Verschlussdeckel mit Rastnasen.

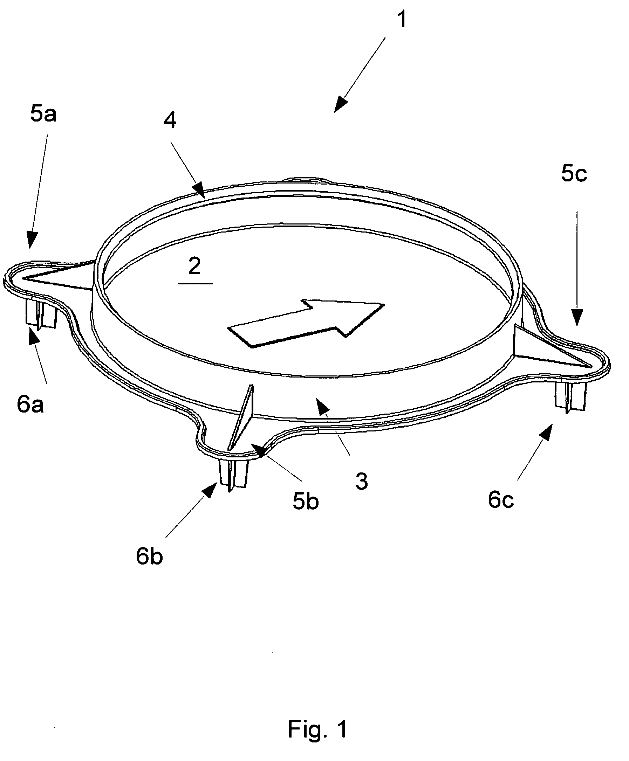

Figur 1 zeigt eine Ausführungsform eines Verschlussdeckels 1. Dieser besitzt eine im Wesentlichen kreisrunde Grundfläche 2, deren Lage mit Hilfe des Pfeils näher angegeben ist. Der Verschlussdeckel 1 besitzt einen Ringflansch 3 mit einer Hinterschneidung 4. Mit dem Ringflansch 3 kann das Ende einer Rohröffnung umfasst werden.

Die Grundfläche 2 erstreckt sich jenseits der vom Ringflansch 3 definierten Kreisfläche und besitzt vier laschenförmige Abschnitte, von denen in der perspektivischen Ansicht drei zu sehen sind, nämlich die Abschnitte 5a, 5b und 5c.

Auf der Unterseite der Grundfläche 2 befinden sich insgesamt vier Halteelemente, von denen in Figur 1 drei zu erkennen sind, nämlich die Halteelemente 6a, 6b und 6c. Jedes Halteelement befindet sich unterhalb eines laschenförmigen Abschnitts 5a, 5b und 5c.

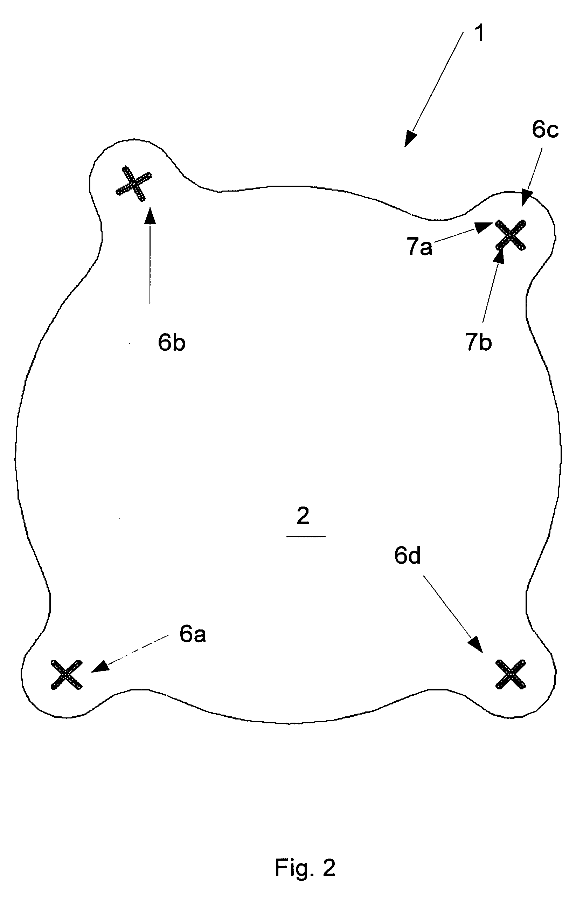

Figur 2 zeigt eine Draufsicht auf die Unterseite des Verschlussdeckels der Figur 1. Man erkennt, dass die Halteelemente 6a, 6b, 6c und 6d auf einer Kreislinie angeordnet sind und in der Draufsicht die Form eines Kreuzes haben. Es handelt sich hierbei um Halteelemente im Sinne von Patentanspruch 5 mit zwei sich kreuzenden Stegen 7a und 7b. Die Stege 7a, 7b sind zum Ende hin leicht angeschrägt, z. B. unter einem Winkel von 2°, um die Klemmwirkung zu verbessern, wenn die Halteelemente 6a, 6b, 6c und 6d in ein Schraubgewinde eingebracht werden.

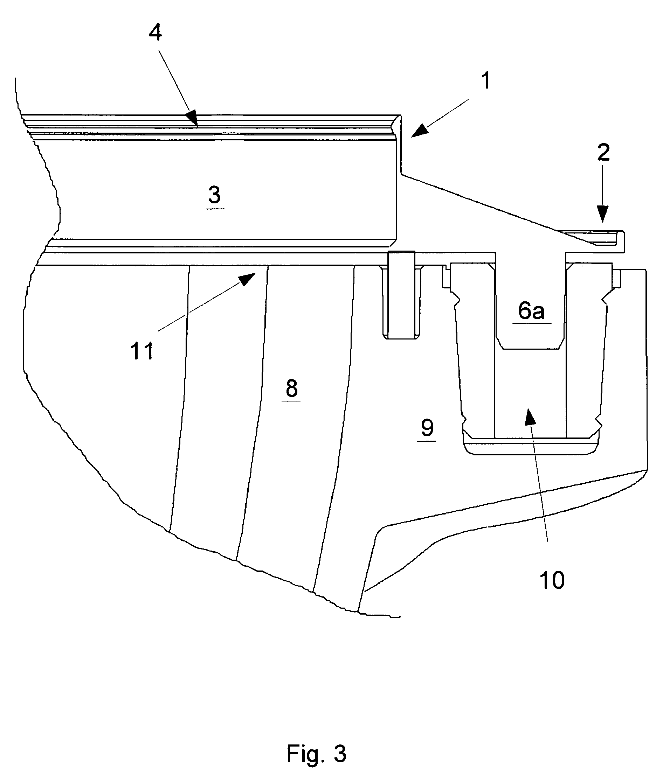

Figur 3 zeigt ausschnittsweise einen Verschlussdeckel 1 in einer Seitenansicht. Er dient dazu, die Öffnung 11 eines Rohrs 8 zu verschließen, das seitlich angeformte Schraubaugen 9 hat. Unterhalb der Grundfläche 2 besitzt der Verschlussdeckel 1 ein Halteelement 6a im Passsitz im Gewindeloch 10 des Schraubauges 9. Oberhalb der Grundfläche 2 befindet sich der mit einer Hinterschneidung 4 ausgestattete Ringflansch 3.

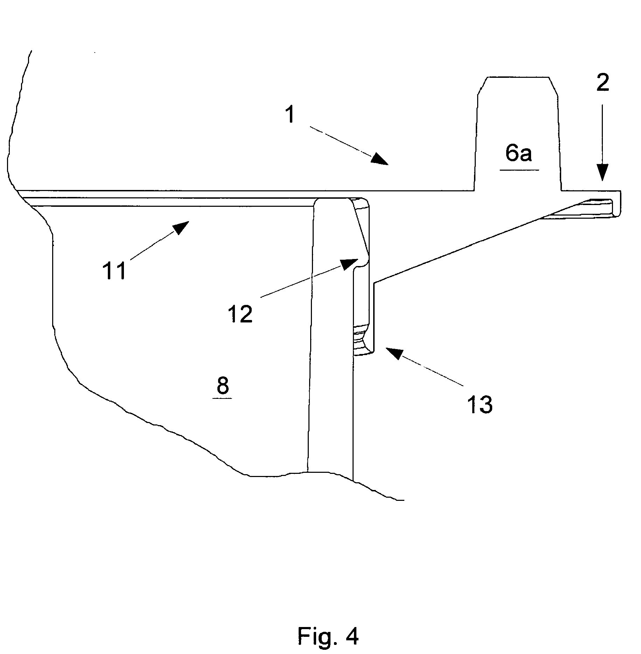

Figur 4 zeigt ausschnittsweise ein Rohr 8 mit einer Rohröffnung 11. Um die Rohröffnung 11 zu verschließen, besitzt der Verschlussdeckel 1 Rastnasen, von denen in Figur 4 nur die Rastnase 13 gezeigt ist, die die Rohröffnung 11 umgreift. Das Rohr 8 besitzt außenseitig einen Vorsprung 12, wo die Rastnase 13 einrastet, sodass der Verschluss 1 die Rohröffnung 11 verschließt.

### Bezugszeichenliste

- 01: Verschlussdeckel
- 02: Grundfläche
- 03: Ringflansch
- 04: Hinterschneidung
- 5a: laschenförmiger Abschnitt
- 5b: laschenförmiger Abschnitt
- 5c: laschenförmiger Abschnitt
- 6a: Halteelement
- 6b: Halteelement
- 6c: Halteelement
- 6d: Halteelement
- 7a: Steg
- 7b: Steg
- 8: Rohr
- 9: Schraubauge
- 10: Gewindeloch
- 11: Öffnung
- 12: Vorsprung
- 13: Rastnase

## Patentansprüche

1. Verschlussdeckel für Rohre, umfassend eine Grundfläche (2), die auf einer Seite einen Ringflansch (3) zum Umfassen einer Rohröffnung hat, und die auf der anderen Seite mindestens zwei senkrecht zur Grundfläche ausgerichtete Halteelemente (6a, 6b, 6c, 6d) besitzt, mit denen der Verschlussdeckel (1) im Bereich einer Behälteröffnung befestigbar ist, um diese zu verschließen.

2. Verschlussdeckel nach Anspruch 1, bei dem die Halteelemente auf einer Kreislinie angeordnet sind.

3. Verschlussdeckel nach Anspruch 1, bei dem die Halteelemente Rastnasen (13) sind.

4. Verschlussdeckel nach Anspruch 1, bei dem die Halteelemente in eine kreisrunde Öffnung einführbar und dort im Passsitz positionierbar sind.

5. Verschlussdeckel nach Anspruch 2, bei dem die Projektion der Halteelemente auf die Grundfläche eine n-zählige Symmetrie aufweist oder ein Kreis ist.

6. Verschlussdeckel nach Anspruch 1, bei dem das Halteelement aus zwei sich kreuzenden und senkrecht zueinander stehenden plättchenförmige Stegen (7a, 7b) besteht.

7. Verschlussdeckel nach Anspruch 3 oder 4, bei dem sich das Halteelement zu der der Grundfläche abgewandten Seite verjüngt.

8. Verschlussdeckel nach einem der Ansprüche 3 bis 5, bei dem die Halteelemente aus einem elastischen Material bestehen.

9. Verschlussdeckel nach einem der vorhergehenden Ansprüche, bei dem die mit einem Ringflansch ausgestattete Seite der Grundfläche mindestens einen weiteren Ringflansch hat.

10. Verschlussdeckel nach einem der vorhergehenden Ansprüche, bei dem die mit Halteelementen versehene Seite der Grundfläche mindestens einen Ringflansch hat.

11. Verschlussdeckel nach einem der vorhergehenden Ansprüche, bei dem die mit einem Ringflansch ausgestattete Seite der Grundfläche ebenfalls mindestens zwei senkrecht zur Grundfläche ausgerichtete Halteelemente besitzt.
